# EUROPEAN PATENT SPECIFICATION

(11) **EP 2 582 782 B1**
(45) Date of publication and mention of the grant of the patent: **08.08.2018**
(21) Application number: 10742037.4
(22) Date of filing: 21.06.2010
(51) Int. Cl.: C12G 1/02

(54) **FERMENTATION APPARATUS**
FERMENTATIONSVORRICHTUNG
DISPOSITIF DE FERMENTATION

(43) Date of publication of application: 24.04.2013
(73) Proprietor: Noform S.r.l., 30020 Meolo (VE) (IT)
(72) Inventor: CROSATO, Remo, I-30020 Meolo (Venezia) (IT)
(74) Representative: Citron, Massimiliano
(86) International application number: PCT/IB2010/052802
(87) International publication number: WO 2011/161495

(56) References cited:
- EP-A1- 1 314 778
- EP-A1- 1 964 914
- EP-A1- 2 058 385
- WO-A1-2009/063302
- WO-A1-2010/105675
- FR-A1- 2 937 651
- US-A- 4 136 970
- US-A- 4 595 296
- US-A1- 2006 110 491

## Description

The invention relates to a fermentation method and to an apparatus suitable for carrying it out. While the invention is useful for treating any vegetal product in pressed form, the following description shall refer by way of an example to wine-making, a field wherein the invention has proved to be especially effective.

Wine-making takes place with the aid of particular tanks, where must is introduced to ferment. The fermentation process generates a large amount of gaseous products, especially CO₂, which actively participate in the success of a good wine. Gases exhale from the must and push the marc and any solid part upwards, where it compacts and forms a solid layer, called "cap".

The above alcoholic fermentation takes place by means of yeasts that may either be intrinsic, that is, contained in the grapes and that in any case in standard conditions trigger the fermentation, or added, that is, selected in laboratory and introduced into the fermenter on the basis of the yeast features, and thus of the wine to be obtained. During the alcoholic fermentation process, the yeasts, which need oxygen for their life and multiplication, transform the sugar into alcohol and release large amounts of CO₂ (40 to 50 litres of CO₂ per litre of must).

The alcoholic fermentation may take place without oxygen but the resulting wine would be poor quality. Therefore, there is the problem of not just properly oxygenating the yeasts for obtaining a good wine, but also of doing it evenly, in all the liquid mass of must. Another reason for introducing (in as controlled and even manner as possible) oxygen (or air) into the must is that colour is fixed through the oxygen.

By knowing the sugar levels into the must, the volume of must contained in the fermenter, the type of yeasts available, and the oxygen requirements per litre of must it is possible to define in advance how much oxygen the alcoholic fermentation needs to properly take place within a certain range of time and at certain controlled temperatures.

Therefore, another problem rises: to introduce exactly the desired amount of oxygen into the fermenter, during the wine-making steps, since the introduction of little oxygen slows down or strangles the fermentation.

The prior art comprises partial solutions that do not solve the above problems.

For example, yeasts are oxygenated into the must - more briefly, hereinafter it is said that "must is oxygenated" - through nozzles (macro-oxygenation) placed in one or more points of the fermenter, by injecting air at high pressures (1 to 8 bar) and low rates into the must; or, in the fermentation of white wines, CO₂ is injected into the must through nozzles or porous plugs. During the storage steps, controlled oxygen injections are again made with porous plugs immersed into the wine (micro-oxygenation).

This system allows knowing exactly the gas amount: air, CO₂ or oxygen introduced in the fermenter/storage tank, but it is only capable of affecting the liquid column placed on the vertical of the porous plug or of the nozzle. And for problems of clogging of the porous plugs and of the nozzles, for the internal hygiene of the fermenter or usage practicality, it is not possible to increase the number of nozzles or porous plugs as desired.

Other times, during the fermentation of red wines, must is drawn with a pump and a punping-over tube in a low point of the tank and it is sprayed over the cap, injecting air into the pumping-over tube. It is thus possible to affect all the must in the oxygenation, but it is proven that the use of mechanical members or pumps during the fermentation processes considerably deteriorates the organoleptic qualities of must.

EP 2 058 385 discloses a winemaking system having two tanks for moving gas from one to another and breaking the cap formed therein. The pressure in the second tank is controlled precisely, also by introducing gas into it.

The main object of the present invention is to propose a fermentation method and apparatus which improves the prior art.

Other objects are to propose a fermentation method and an apparatus which
- improves the wine fermentation quality; and/or
- allows an even oxygenation of the must; and/or
- allows a precise and controlled oxygenation of the must; and/or
- improves the organoleptic properties of wine, such as flavour and/or aroma;
- improves the temperature control of the pressed product.

The above objects are achieved by the method and apparatus according to the annexed claims.

An amount of gas is introduced in the liquid part in a substantially instantaneous manner so as to form one or more macro-bubbles that going up turbulently affect and stir substantially all the volume of the liquid part. The formation of macro-bubbles and/or bubbles thus allows shaking all the mass of liquid must, mixing it and affecting it all with the gas introduced. In this way also the temperature of all the liquid mass is made uniform.

Since good wine is obtained provided that during the wine-making process musts are properly fed by a proper amount of air (alcoholic fermentation of red wines), or CO₂ or other gas (fermentation of white aromatic wines), the invention improves the fermentation process through the introduction, from the exterior into the must in the fermentation tank, of air or other promoter gases, which promote the proper occurrence of the fermentation processes, such as that of yeasts.

In case of storages, the invention further allows carrying out micro-oxygenations of the wine without using porous plugs. Gas is introduced by dosing the amount thereof precisely.

In order to adjust the amount of gas to be transferred into the fermentation tank precisely, so as to favour the proper chemical reactions without activating harmful ones, a second storage tank is preferably pre-charged. The invention provides means for charging a predetermined amount of oxygenating gases (GS) or fermentation promoter gases, such as air and/or oxygen, CO₂, nitrogen, etc., or mixtures, into the second tank at a higher pressure than that present into the (first) fermentation tank. The second tank is then put in communication with the first one at one or more points under the cap so that, thanks to the pressure difference between the two tanks, gases are transferred into the liquid must mass with the formation of bubbles or micro-bubbles that going up, affect and oxygenate it. The result is the maximum diffusion of oxygen in all the liquid mass, with the effect of reaching the largest amount of yeasts for activating and feeding them.

In order to determine the amount of gas to charge it is possible to use means for adjusting the amount of gas introduced in the second tank so as to introduce a predetermined amount of gas therein and/or means for controlling the pressure of the gas introduced in the second tank so as to infer the amount introduced. Technologically, measuring the gas pressure in a tank is easier than measuring the amount of gas introduced, thus an indirect measurement is preferred. In view of this, the pressures corresponding to gas amounts will be indicated hereinafter, meaning that the corresponding amount value is inferred algorithmically (for example via software) or empirically from that of pressure, for which a resolution of 1/100 bar is sufficient.

Since the storage tank volume is constant, temperature is, too, and it is reasonable to consider with good approximation the stored gases as ideal gases, the pressure measurement gives an information on the moles of gas contained, and thus on the moles of gas transferred (the ratio between initial and final pressures in the storage tank equals that between the initial and final moles).

The valve means control may be manual or preferably automatic (for example via software control).

The description of the invention will now refer to the annexed figure, wherein the functional structure of a preferred embodiment of wine-maker is schematically shown.

A tank 10 is filled by known means and methods with must 30. A conduit 14 places the top portion of tank 10 in communication, in a controllable manner, with the top portion of a second tank 12 through a valve 24. A second conduit 18 places the bottom portion of tank 10 in communication, in a controllable manner, with the bottom portion of tank 12 through a valve 26.

It is possible to use one or more inlet conduits, all controlled by the same valve, or each conduit controlled by its own valve. The valve opening control may be simultaneous or not - that is, the valves are opened in a sequence for affecting multiple portions of the volume and of the cap. With the same purpose, various blowing conduits may be positioned in different points of the tank.

Tank 10 has a top vent 20 (optional) controllable by a valve 22 with the function of degassing.

On the walls of tank 12 there are provided thermo-regulating means or heat exchangers means 40, with the function of regulating or imposing the gas temperature inside tank 12. A third tank 50 containing air, nitrogen, oxygen or other food-grade gas GS is connected to tank 12 through a conduit 52 wherein the flow is adjustable through a valve 54.

In place of tank 50 it is also possible to use a machine or means for producing technical gases, such as a food-grade compressor (if it is compressed air), or a producer of nitrogen or else.

The wine-maker operates as follows.

Must 30 is introduced into tank 10, and valve 26 is initially closed for blocking an outflow of must 30.

After a certain time, must 30 ferments and generates gaseous products or gases 80 (mostly CO₂) and gives rise to a solid cap CP. It should be noted that conduit 18 leads into tank 10 at a point occupied by must 30, at a lower height than the bottom of cap CP. Now, valve 24 is open and gas 80 spontaneously fills tank 12.

Valve 22 is closed to prevent the escape of gas 80 from tank 10.

After a predetermined time, tanks 10, 12 are isolated by closing valve 24. Gas 80 remains trapped under pressure into tank 12, whereas the other one is depressurised (or degassed) through conduit 20 by opening valve 22.

The pressure of gas 80 into the isolated tank 12 can be controlled in the previous step through valve 22, for example by using one with a calibrated opening threshold. Valve 22 also allows regulating the residual pressure in tank 10 after degassing; experimentally it was found to be advantageous and simple to re-establish the atmospheric pressure therein.

At this point, in tank 12 there is a certain amount of CO₂ at a certain pressure, which is the gaseous product, saturated with flavours, of the process for transforming sugars into alcohols during the fermentation.

Yeasts in the fermentation step need a certain amount of oxygen by weight (or volume) a day per litre of must present in the wine-making tank 10. To improve the fermentation process, gases like air or oxygen are added to tank 12 from the exterior, for example taken from the third tank 50 by opening valve 54. The gas injection into tank 12 may take place by pressure difference or forced pumping.

For example, the proper daily feeding of the must 30 may require 10 mgr oxygen a day, which for example corresponds to 150 mbar air introduced into tank 10. If in tank 12 there already are 300 mbar CO₂, a mixture/volume of CO₂ and air and/or O₂ at 450 mbar is created.

Valve 26 is then opened and gas 80 spontaneously flows into must 30 until the pressure balance between tanks 10, 12 is re-established. While going up, the gas determines the soft breakage of cap CP and the leaching thereof, extracting the natural colouring agents and aromas thereof. The invention provides the further effect of stirring all must 30. The sudden introduction of an adequate volume of gas into tank 10 has the effect of creating macro-bubbles and bubbles of gas at low pressure and thus favouring the oxygenation of all the must with a certain amount of oxygen and in a limited time.

The volume of a macro-bubble preferably ranges from 5% to 40% of the volume of tank 10, preferably about 10%-15%.

The use of tank 12 allows having a gas storage tank wherein the amount of gas to be injected into tank 10 is charged precisely. As preferred proportion between the dimensions of tanks 10, 12, it is preferred for the volume of tank 12 to be from 10% to 90% of the volume of tank 10, preferably from 10% to 70%, in particular 30% (better efficiency relative to encumbrance). Of course, the ratio may vary for requirements related to the types of grapes to be processed.

EXAMPLE: The connecting tube or tubes (blowing) 18 has/have an inner diameter that normally ranges from 30 mm to 80 mm for fermenters comprised between 50 and 300 hl. For lower or higher capacity fermenters, it is possible to use respectively smaller or larger diameters. Tank 10 has a 200 hl total capacity; tank 12 has a 60 hl volume. In tank 12 there is a 450 mbar pressure given by the sum of the contributions of
- CO₂ of fermentation (300 mbar);
- air introduced for yeast oxygenation (100 mbar);
- introduced nitrogen (50 mbar).

The hydrostatic pressure head of must is 150 mbar, so the pressure difference between tanks 12, 10 is 300 mbar. It is envisaged that at each cycle, a bubble or amount of gas mixture (CO₂+air+nitrogen) is blown in tank 10 with a volume of about 20 hl through tube 18 within a period of 2-5 seconds.

As preferred pressure differential between tanks 10, 12, an interval comprised between 50 and 1000 mbar is preferred, in any case variable in relation to the volumes of tanks 10, 12, to the type of grapes to be made into wine and to the type of wine-making.

Besides breaking the cap in a soft manner making the must spill out and reintroducing the aromas and the volatiles flavours (contained in the fermentation CO₂ stored in tank 12) in the must and in the cap, the macro-bubble moves all the must in a very short time and oxygenates it completely. Experimental tests show that, after 10-15 seconds after the introduction of the macro-bubble, in all the must there is a very fine suspension of gas mixture micro-bubbles. This system therefore allows carrying out both a macro- and a micro-oxygenation at the same time.

Thus, the gas macro-bubble introduced into must 30 will not only move it and break cap CP, but it will feed the yeasts present with the proper amount of air/oxygen required thereby during the fermentation. Since a large volume of low pressure gas is introduced, the effect is a complete stirring and an immediate mixing of all the liquid volume. Well unlike known systems, for example with porous plug, wherein air or oxygen are introduced in one or more points in the must that blow air or oxygen, actually affecting only the cone of must located over the dispensing point.

With the invention it is possible to carry out must shifting and cap breaking, in the substance for keeping the cap wet, also during the pre-fermentation and post-fermentation steps, where there is no sufficient production of CO₂.

In this case, non-oxidising gases, or in any case functional to the given step of the fermentation process, are introduced into the gas storage tank 12. The wine-making tank 10 remains at a pressure of 0 bar. The connecting tubes 14, 18 are closed. Nitrogen or other gas or mixtures of suitable gases, for example at 500 mbar, are introduced into tank 12.

Valve 26 is then opened and the macro-bubble and/or micro-bubbles of nitrogen gas introduced (or other) is released into must 30 and under cap CP, breaking it. The effect of total affecting of the must and/or of the cap is developed here, too.

This possibility is very important for aromatic white wines, which are particularly sensitive to the presence of oxygen, and therefore require a different processing type compared to red wines. For white wines, the invention uses external CO₂ for charging tank 12, allowing a considerable improvement of the process.

In fact, CO₂ is capable of extracting aromas and flavours and prevents the onset of harmful bacteria and the wine oxidation. Thus, in an ideal environment a white wine is processed with CO₂, provided that the mass of [peel + must] is cyclically and entirely moved by CO₂.

It is preferred to keep tank 10 in a slight pressure (e.g. 50-100 mbar), and this both for preventing the air from entering into tank 10, and for keeping a portion of CO₂ dissolved into the must (see Henry's law).

The invention therefore also solves the problem of extracting aromas and flavours and at the same time it prevents the wine oxidation.

Variants of the above method envisage using means 40 with the following advantageous effects.

Fermentation normally occurs between 20 and 30 °C. While the fermentation gas stored into tank 12 is roughly identified with CO₂, it actually is a compound of volatile substances, mostly CO₂, but for an important amount of oenologicalvalue, of typical flavours and tastes of fermentation grapes.

By suddenly decreasing the temperature of the stored gas from 20-30 °C to 0-5 °C, the aromas are condensed and at the end of the wine-making process they are removed from tank 12 through a simple discharge. Such aromas may be reintroduced into the wine at the end of the fermentation process for improving taste and flavours thereof.

It is also possible to cool or heat the gases stored into tank 12 to be introduced (blown) into tank 10. The purpose is to act inside the mass of liquid and/or [liquid + peel] for varying/controlling the temperature thereof.

Theoretically the best system for thermo-regulating a liquid mass is to introduce therein, better if at the centre, one or more heat exchangers for controlling the temperature thereof. This system however exhibits three drawbacks:
- a heat exchanger inserted into a food tank is a source of possible bacterial pollution;
- the presence of plates and/or coils interferes with the motions of the mass [liquid + peel], and can interfere with mechanical cap-moving members;
- heat exchangers use special liquids added with toxic chemicals that prevent the liquid from freezing below 0 °C. Should a heat exchanger break, such liquid irreparably pollute the must.

For all these reasons, although more thermally efficient, internal heat exchangers have almost completely been replaced with heat exchangers applied outside the tank body, usually as external pockets.

This solution solves the above problems but is less efficient, since the calorific flow to and from the exchanger must reach the centre of the liquid mass, the most critical and most difficult point for temperature control.

During the alcoholic fermentation it is very important to control the must temperature as evenly as possible. A quick uncontrolled increase thereof may cause the phenomenon of undesired thermo-vinification, that is, the heating of must and marc beyond a certain threshold, by the effect of the uncontrolled proliferation of yeasts and consequent degradation of the must organoleptic properties.

This problem is much more felt if the fermentation tank dimensions are larger.

Using means 40 it is possible to thermo-regulate the gas mixture stored into tank 12. Blowing it into the must and exploiting the capillary diffusion, it is possible to obtain the effect of immediately cooling or warming all the mass [liquid + peel] with macro and micro bubbles at a controlled temperature.

It is clear that each step of the processes described may advantageously be automated and/or programmed. This allows, for example, setting periodical breakage cycles of cap CP through bubbles, experimenting degassing methods for tank 10, using various compositions of the gas mixed into tank 12 and then introduced into tank 10, injecting a different amount or mixture of gases into tank 10 with programmed times.

A part of the structure described is the same as that present in EP 2 058 384, to which the invention can bring a great improvement. However, it should be noted that conduit 14 and valves 24, as the relevant process steps, are optional for oxygenation as they only serve for recovering CO₂ and aromas from tank 10.

It is convenient for the process management, the sensor detection and the valve piloting to occur through an elaborating unit, for example a PLC.

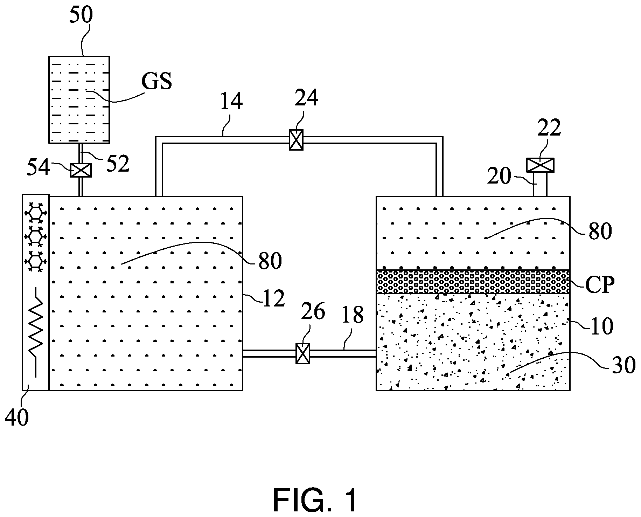

In the figure, tanks 10, 12 are shown isolated but for example, they may be partitions of a single tank.

## Claims

1. Method for treating a vegetal product in pressed form, formed by a liquid portion and a solid floating portion, comprising the steps of
(i) storing the pressed product in a first tank (10) to make it ferment therein;
(ii) introducing, in the liquid portion contained in the first tank (12), an amount of oxygenating gases (GS) or maceration/fermentation promoter gases, such as air and/or oxygen, CO₂, nitrogen, argon or a gas in general,
said amount being
introduced in a substantially instantaneous manner and
adapted for forming one or more macro-bubbles that going up affect and stir substantially all the volume of the liquid portion,
wherein
(iii) a second tank (12) is charged with gas at a higher pressure than that present in the first tank; and
(iv) the second tank is put in communication with the first one at one or more points in the liquid portion so that, thanks to the pressure difference between the two tanks, the transfer of said amount of gas takes place,
**characterized in that**
said amount is calculated based on the overall requirement of oxygen of the yeasts present in the pressed product contained in the first tank for the adequate oxygenation thereof; or
said amount is calculated based on the overall requirement of CO₂ or other technical gas of the pressed product contained in the first tank for the adequate fermentation thereof.

2. Method according to claim 1, wherein the first tank (12) is connected to the second one for capturing into the latter the gaseous products (80) of fermentation formed into the first tank, so as to use them during said transfer.

3. Method according to claim 2, wherein the temperature into the second tank is quickly decreased to condensate the flavours present in the gaseous products of fermentation.

4. Method according to any one of the previous claims, wherein the temperature of the gas introduced in the first tank is regulated so as to regulate the pressed product's temperature.

5. Method according to claim 1, wherein in order to determine the amount of gas to charge, means are used for adjusting the amount of gas introduced in the second tank

6. Method according to claim 1, wherein in order to determine the amount of gas to charge, means are used for controlling the pressure of the gas introduced in the second tank so as to infer the amount introduced.

7. Apparatus for treating a vegetal product in pressed form, formed by a liquid portion and a solid floating portion, comprising
- a first tank (10) for containing the pressed product (30),
- a second tank (12),
- a conduit system (18) adapted for putting the first and the second tank in communication, the system having one or more outlets into the first tank where during use there is the liquid mass of the pressed product,
- valve means (26) associated to the conduit system for making the two tanks selectively communicating according to the open/closed state of said means,
- means for charging an amount of oxygenating gases (GS) or fermentation promoter gases, such as air and/or oxygen, CO₂, nitrogen, etc., or mixtures or gases in general, into the second tank (12) at a higher pressure than that present into the first tank, said amount being able to form one or more macro-bubbles and/or bubbles that, going up, affect and stir substantially all the volume of the liquid portion,
**characterized in that** it comprises
- a programmable device for (i) calculating the amount of oxygenating gases (GS) or fermentation promoter gases or gases chemically reactive with the liquid part required for oxygenating/affecting all the volume of the liquid part contained in the first tank, and (ii) controlling the valve means (26) for charging the calculated amount of gas into the second tank and discharging it into the first tank

8. Apparatus according to claim 7, comprising
- a second conduit system (14) adapted for putting a part of the first tank, where gaseous products are accumulated, in communication with the second tank, and
- valve means (24) associated to the second conduit system for making the two tanks selectively communicating according to the open/closed state of said means.

9. Apparatus according to claim 7 or 8, comprising an outer casing internally divided by at least one partition into two sub-volumes that constitute said first and second tank.

10. Apparatus according to one of claims 7 to 9, wherein the charging means comprise
- a third tank, or a source, of at least one gas, for example oxygenating (GS) or fermentation promoter gas, and
- a conduit system (52) adapted for putting the second and the third tank, or the source, in communication, and
- valve means (54) associated to the conduit system for making the second and third tank, or the source, selectively communicating according to the open/closed state of said means.

11. Apparatus according to one of claims 7 to 10, comprising heat exchanger means adapted for releasing (removing) heat to (from) the second tank.

12. Apparatus according to one of claims 7 to 11, comprising temperature regulating means for the gas contained into the second tank.

13. Apparatus according to one of the previous claims 7 to 12, comprising valve means (22) for degassing the first tank outwards.

## Patentansprüche

1. Verfahren zur Behandlung eines Pflanzenproduktes in Form von Most, bestehend aus einem flüssigen Teil und einem festen Schwimmteil, umfassend die Phasen des
(i) Lagerns des Mosts in einem ersten Tank (10), um ihn darin gären zu lassen;
(ii) Einleitens in den flüssigen Teil, der im ersten Tank (12) enthalten ist, einer Menge an sauerstoffhaltigem Gas (GS) oder Beschleuniger der Gärung / Einmaischung, z.B. von Luft und/oder Sauerstoff, CO₂ Stickstoff, Argon oder einem Gas im Allgemeinen,
diese Menge wird
im Wesentlichen sofort eingeleitet und
eignet sich zum Bilden einer oder mehrerer Makroblasen und/oder Blasen, die beim Aufsteigen im Wesentlichen die gesamte Menge des flüssigen Teils umfassen und aufrühren,
wobei
(ii) ein zweiter Tank (12) mit Gas unter einem Druck gefüllt wird, der größer ist als der im ersten Tank vorhandene Druck; und
(iii) der zweite Tank im flüssigen Teil an einer oder mehreren Stellen mit dem ersten Tank verbunden ist, sodass die Umfüllung aufgrund der Druckdifferenz zwischen den zwei Tanks dieser Gasmenge erfolgt,
**dadurch gekennzeichnet, dass**
diese Menge auf der Grundlage des gesamten Sauerstoffbedarfs der Hefen berechnet wird, die in dem Most des ersten Tanks enthalten sind, um sie angemessen mit Sauerstoff zu versorgen, oder
diese Menge wird auf der Grundlage des gesamten Bedarfs an CO₂ oder anderem technischen Gas des Mosts berechnet, der im ersten Tank für seine angemessene Gärung enthalten ist.

2. Verfahren nach Anspruch 1, wobei der erste Tank (10) mit dem zweiten Tank verbunden ist, um in diesem die gasförmigen Gärungsprodukte (80) aufzufangen, die sich in dem ersten Tank gebildet haben, um sie bei der besagten Umfüllung zu verwenden.

3. Verfahren nach Anspruch 2, wobei die Temperatur in dem zweiten Tank schnell gesenkt wird, um die in den gasförmigen Gärungsprodukten vorhandenen Aromen zu verdichten.

4. Verfahren nach einem der vorhergehenden Ansprüche, bei dem die Temperatur des in den ersten Tank eingeführten Gases so eingestellt wird, dass die Temperatur des Mostes reguliert wird.

5. Verfahren nach Anspruch 1, wobei Einrichtungen zur Regulierung der in den zweiten Tank eingeleiteten Gasmenge verwendet werden, um die einzuleitende Gasmenge zu bestimmen.

6. Verfahren nach Anspruch 1, wobei Einrichtungen zur Regulierung der in den zweiten Tank eingeleiteten Gasmenge verwendet werden, um den Druck des in den zweiten Tank eingeleiteten Gases zu steuern und so auf die zugeführte Menge zu schließen.

7. Vorrichtung zur Behandlung eines Pflanzenproduktes in Form von Most, bestehend aus einem flüssigen Teil und einem festen Schwimmteil, umfassend
- einen ersten Tank (10) zur Aufnahme des Mosts (30),
- einen zweiten Tank (12),
- ein Leitungssystem (18) zum Verbinden des ersten und des zweiten Tanks, wobei das System einen oder mehrere Auslässe in dem ersten Tank aufweist, wo die flüssige Masse des Mosts enthalten ist;
- Ventileinrichtungen (26), die mit dem Leitungssystem verbunden sind, um die zwei Tanks im offenen / geschlossenen Zustand der Einrichtungen wahlweise zu verbinden,
- Einrichtungen zum Einleiten einer Menge an sauerstoffhaltigen Gasen (GS) oder gärungsfördernden Gasen, z.B. Luft und/oder Sauerstoff, CO₂, Stickstoff usw. oder Mischungen oder Gase im Allgemeinen in den zweiten Behälter (12), bei einem Druck, der größer ist als der im ersten Behälter vorhandene Druck, wobei die Menge geeignet ist, um ein oder mehrere Makroblasen und/oder Blasen zu bilden, die beim Aufsteigen im Wesentlichen die gesamte Menge des flüssigen Teils umfassen und aufrühren;
**dadurch gekennzeichnet, dass sie**
- eine programmierbare Einrichtung umfasst, (i) um die Menge an sauerstoffhaltigen Gasen (GS) oder Gärungsbeschleunigern oder chemisch mit dem flüssigen Teil wirkende Substanzen zu berechnen, die notwendig ist, um die gesamte Menge des in dem ersten Tank enthaltenen flüssigen Teils mit Sauerstoff zu versorgen / zu beteiligen, und (ii) die Ventileinrichtungen (26) zum Einleiten der berechneten Gasmenge in den zweiten Tank und zum Abführen desselben in den ersten Tank zu steuern.

8. Vorrichtung nach Anspruch 7, umfassend
- ein zweites Leitungssystem (14), das dazu bestimmt ist, einen Teil des ersten Tanks, in dem sich die gasförmigen Produkte ansammeln, mit dem zweiten Tank zu verbinden, und
- Ventileinrichtungen (24), die mit dem zweiten Leitungssystem verbunden sind, um die zwei Tanks entsprechend dem offenen / geschlossenen Zustand der Einrichtungen wahlweise zu verbinden.

9. Vorrichtung nach Anspruch 7 oder 8, mit einem äußeren Gehäuse, das innen durch mindestens eine Trennwand in zwei Teilmengen unterteilt ist, die den ersten und den zweiten Tank bilden.

10. Vorrichtung nach einem der Ansprüche 7 bis 9, wobei die Einleitvorrichtungen Folgendes umfassen
- einen dritten Tank oder eine Quelle von mindestens einem Gas, z.B. sauerstoffhaltiges Gad (GS) oder Gärungsbeschleuniger, und
- ein Leitungssystem (52), das dazu bestimmt ist, den zweiten und dritten Tank oder die Quelle zu verbinden, und
- Ventileinrichtungen (54), die mit dem Leitungssystem verbunden sind, um den zweiten und den dritten Tank entsprechend dem offenen / geschlossenen Zustand der Einrichtungen wahlweise zu verbinden.

11. Vorrichtung nach einem der Ansprüche 7 bis 10, umfassend Wärmeaustauscheinrichtungen, die geeignet sind, Wärme von/in den zweiten Tank abzugeben (zu entfernen).

12. Vorrichtung nach einem der Ansprüche 7 bis 11, mit Einrichtungen zum Regeln der Temperatur für das in dem zweiten Tank enthaltene Gas.

13. Vorrichtung nach einem der vorhergehenden Ansprüche von 7 bis 12, mit einer Ventileinrichtung (22) zum Entgasen des ersten Tanks nach außen.

## Revendications

1. Procédé pour le traitement d'un produit végétal sous forme de moût constitué d'une partie liquide et d'une partie solide flottante, comprenant les phases consistant à
(i) stocker le moût dans une première cuve (10) pour le faire fermenter dans celle-ci ;
(ii) injecter dans la partie liquide contenue dans la première cuve (12) une quantité de gaz oxygénants (GS) ou de gaz activateurs de la fermentation / macération, par exemple de l'air et/ou de l'oxygène, du CO₂, de l'azote, de l'argon ou tout gaz en général,
cette quantité étant
injectée de manière pratiquement instantanée et
en mesure de former une ou plusieurs macrobulles et/ou bulles qui, en remontant, affectent et agitent substantiellement tout le volume de la partie liquide ;
dans lequel
(ii) l'on charge une deuxième cuve (12) en gaz à une pression supérieure à celle présente dans la première cuve ; et
(iii) l'on fait communiquer la deuxième cuve avec la première en un ou plusieurs points dans la partie liquide afin que, grâce à la différence de pression existant entre les deux cuves, le transfert de la quantité de gaz se produise ;
**caractérisé par le fait que**
cette quantité est calculée en fonction des besoins globaux en oxygène des levures présentes dans le moût contenu dans la première cuve, pour que celles-ci soient convenablement oxygénées, ou
cette quantité est calculée en fonction des besoins globaux en CO₂ ou en tout autre gaz technique du moût contenu dans la première cuve, pour que celui-ci fermente convenablement.

2. Procédé selon la revendication 1, dans lequel l'on raccorde la première cuve (10) à la deuxième pour capter dans cette dernière les produits gazeux (80) de la fermentation qui se sont formés dans la première cuve, en vue de les utiliser au cours du transfert.

3. Procédé selon la revendication 2, dans lequel l'on abaisse rapidement la température dans la deuxième cuve pour faire condenser les arômes se trouvant dans les produits gazeux de la fermentation.

4. Procédé selon l'une quelconque des revendications précédentes, dans lequel l'on régule la température du gaz injecté dans la première cuve de manière à réguler la température du moût.

5. Procédé selon la revendication 1, dans lequel l'on utilise, pour déterminer la quantité de gaz à charger, des dispositifs permettant de réguler la quantité du gaz injecté dans la deuxième cuve.

6. Procédé selon la revendication 1, dans lequel l'on utilise, pour déterminer la quantité de gaz à charger, des dispositifs permettant de contrôler la pression du gaz injecté dans la deuxième cuve, de manière à pouvoir en déduire la quantité injectée.

7. Appareil pour le traitement d'un produit végétal sous forme de moût constitué d'une partie liquide et d'une partie solide flottante, comprenant
- une première cuve (10) pour contenir le moût (30),
- une deuxième cuve (12),
- un système de conduits (18) permettant de faire communiquer la première et la deuxième cuves, le système ayant une ou plusieurs ouvertures dans la première cuve où se trouve la masse liquide du moût utilisée,
- des dispositifs à vanne (26) associés au système de conduits, permettant de faire communiquer les deux cuves de manière sélective en fonction de l'état ouvert / fermé de ces dispositifs,
- des dispositifs permettant de charger dans la deuxième cuve (12) une quantité de gaz oxygénants (GS) ou de gaz activateurs de la fermentation, par exemple de l'air et/ou de l'oxygène, du CO₂, de l'azote, etc... ou encore des mélanges ou tout gaz en général, à une pression supérieure à celle présente dans la première cuve, cette quantité étant en mesure de produire une ou plusieurs macrobulles et/ou bulles qui, en remontant, affectent et agitent substantiellement tout le volume de la partie liquide,
**caractérisé par le fait qu'**il comprend
- un dispositif programmable pour (i) calculer la quantité de gaz oxygénants (GS) ou activateurs de la fermentation, ou chimiquement réactifs avec la partie liquide, nécessaires pour oxygéner / couvrir tout le volume de la partie liquide contenu dans la première cuve, et (ii) commander les dispositifs à vanne (26) permettant de charger la quantité de gaz calculée dans la deuxième cuve et de la décharger dans la première cuve.

8. Appareil selon la revendication 7, comprenant
- un second système de conduits (14) permettant de faire communiquer une partie de la première cuve, où s'accumulent les produits gazeux, avec la deuxième cuve, et
- des dispositifs à vanne (24) associés au second système de conduits, permettant de faire communiquer les deux cuves de manière sélective en fonction de l'état ouvert / fermé de ces dispositifs.

9. Appareil selon la revendication 7 ou 8, comprenant une enveloppe extérieure subdivisée à l'intérieur, au minimum par une cloison, en deux sous-volumes constituant les première et deuxième cuves.

10. Appareil selon l'une des revendications 7 à 9, dans lequel les dispositifs de chargement comprennent
- une troisième cuve - ou une source - d'au moins un gaz, par exemple un gaz oxygénant (GS) ou activateur de la fermentation, et
- un système de conduits (52) permettant de faire communiquer la deuxième et la troisième cuves - ou la source - et
- des dispositifs à vanne (54) associés au système de conduits permettant de faire communiquer la deuxième et la troisième cuves - ou la source - de manière sélective en fonction de l'état ouvert / fermé de ces dispositifs.

11. Appareil selon l'une des revendications 7 à 10, comprenant des dispositifs échangeurs de chaleur permettant de céder de la chaleur à de la deuxième cuve ou de la prélever de celle-ci.

12. Appareil selon l'une des revendications 7 à 11, comprenant des dispositifs de régulation de la température pour le gaz contenu dans la deuxième cuve.

13. Appareil selon l'une quelconque des revendications précédentes 7 à 12, comprenant des dispositifs à vanne (22) permettant de dégazer la première cuve vers l'extérieur.
